# EUROPEAN PATENT APPLICATION

(11) **EP 4 700 544 A1**
(43) Date of publication of application: **25.02.2026**
(21) Application number: 24846006.5
(22) Date of filing: 23.07.2024
(51) Int. Cl.: G06F 3/01, G06F 3/00, G06F 1/16, H04W 4/80, G06F 3/16, G06F 3/048, G06V 40/20

(54) **WEARABLE ELECTRONIC DEVICE FOR RECOGNIZING OBJECT, AND CONTROL METHOD THEREOF**

(30) Priority: 25.07.2023 KR 20230096681; 26.09.2023 KR 20230129765
(71) Applicant: Samsung Electronics Co., Ltd., Suwon-si, Gyeonggi-do 16677 (KR)
(72) Inventor: NAM, Myoungwoo, Suwon-si, Gyeonggi-do 16677 (KR); KIM, Hyunsoo, Suwon-si, Gyeonggi-do 16677 (KR); SHIM, Jeaguk, Suwon-si, Gyeonggi-do 16677 (KR); YOO, Nagyeom, Suwon-si, Gyeonggi-do 16677 (KR); LEE, Yonggu, Suwon-si, Gyeonggi-do 16677 (KR); LEE, Yoonho, Suwon-si, Gyeonggi-do 16677 (KR); YIM, Sunghoon, Suwon-si, Gyeonggi-do 16677 (KR)
(74) Representative: HGF
(86) International application number: PCT/KR2024/010613
(87) International publication number: WO 2025/023704

(57) **Abstract**

A wearable electronic device is provided. The wearable electronic device comprises: at least one sensor; a display; at least one processor comprising the at least one sensor and a processing circuit; and a memory storing instructions which, when executed by the at least one processor, cause the wearable electronic device to: detect a plurality of objects included within a first field of view (FOV) of the wearable electronic device, the plurality of objects being detectable through the at least one sensor of the wearable electronic device; recognize the type of a first object among the plurality of objects; identify whether the first object is a real object or a virtual object; determine a first risk level of the first object on the basis of the recognized type of the first object and whether the first object is the real object or the virtual object; determine a first distance related to the first object on the basis of the first risk level of the first object; and on the basis of the distance between the first object and the user's body being less than or equal to the first distance, provide feedback on the basis of the first risk level of the first object.

## Description

### TECHNICAL FIELD

The disclosure relates to an electronic device that recognizes an object and a method of controlling the same.

### BACKGROUND ART

Various services and additional functions provided through portable electronic devices, such as electronic devices, for example, smartphones, are gradually increasing. In order to increase the utility value of these electronic devices and satisfy the needs of various users, communication service providers or electronic device manufacturers are competitively developing electronic devices to provide various functions and differentiate themselves from other companies. Accordingly, various functions provided through electronic devices are also increasingly advanced.

Various services and additional functions provided through wearable electronic devices, such as augmented reality glasses (AR glasses), virtual reality glasses (VR glasses), and head mounted display (HMD) devices, are gradually increasing. In order to increase the utility value of these electronic devices and satisfy the needs of various users, communication service providers or electronic device manufacturers are competitively developing electronic devices to provide various functions and differentiate themselves from other companies. Accordingly, various functions provided through wearable electronic devices are also being increasingly advanced.

AR glasses or VR glasses may provide a realistic experience to a user by displaying a virtual image while worn on the user's head. AR glasses or VR glasses may replace the usability of smartphones in various fields, such as game entertainment, education, or social networking services (SNS). The user may be provided with content of the smartphone and/or content similar to reality through AR glasses or VR glasses worn on the head.

The above information is presented as background information only to assist with an understanding of the disclosure. No determination has been made, and no assertion is made, as to whether any of the above might be applicable as prior art with regard to the disclosure.

### DETAILED DESCRIPTION OF THE INVENTION

### Technical Solution

Aspects of the disclosure are to address at least the above-mentioned problems and/or disadvantages and to provide at least the advantages described below. Accordingly, an aspect of the disclosure is to provide an electronic device that recognizes an object and a method of controlling the same.

Additional aspects will be set forth in part in the description which follows and, in part, will be apparent from the description, or may be learned by practice of the presented embodiments.

In accordance with an aspect of the disclosure, a wearable electronic device is provided. The wearable electronic device includes at least one sensor, a display, and at least one processor including processing circuitry and memory storing instructions.

According to an embodiment, the instructions, when executed by at least one processor, may cause the wearable electronic device to detect a plurality of objects included in a first field of view (FOV), capable of detecting through the at least one sensor, of the wearable electronic device.

According to an embodiment, the instructions, when executed by at least one processor, may cause the wearable electronic device to recognize a type of a first object among the plurality of objects.

According to an embodiment, the instructions, when executed by at least one processor, may cause the wearable electronic device to identify whether the first object is a real object or a virtual object.

According to an embodiment, the instructions, when executed by at least one processor, may cause the wearable electronic device to determine a first risk level of the first object, based on the recognized type of the first object and whether the first object is the real object or the virtual object.

According to an embodiment, the instructions, when executed by at least one processor, may cause the wearable electronic device to determine a first distance related to the first object, based on the first risk level of the first object.

According to an embodiment, the instructions, when executed by at least one processor, may cause the wearable electronic device to provide feedback based on the first risk level of the first object, based on a distance between the first object and a user's body being less than or equal to the first distance.

In accordance with an aspect of the disclosure, a method of controlling a wearable electronic device is provided. The method includes detecting a plurality of objects included in a first FOV, capable of detecting through at least one sensor of the wearable electronic device, of the wearable electronic device.

According to an embodiment, a method of controlling a wearable electronic device may include recognizing the type of a first object among the plurality of objects.

According to an embodiment, a method of controlling a wearable electronic device may include identifying whether the first object is a real object or a virtual object.

According to an embodiment, a method of controlling a wearable electronic device may include determining a first risk level of the first object, based on the recognized type of the first object and whether the first object is the real object or the virtual object.

According to an embodiment, a method of controlling a wearable electronic device may include determining a first distance related to the first object, based on the first risk level of the first object.

According to an embodiment, a method of controlling a wearable electronic device may include providing feedback based on the first risk level of the first object, based on the fact that a distance between the first object and the user's body is less than or equal to the first distance.

In accordance with an aspect of the disclosure, one or more non-transitory computer-readable storage media storing computer-executable instructions that, when executed by one or more processors of a wearable electronic device, cause the wearable electronic device to perform operations are provided. The operations include detecting a plurality of objects included in the first field of view (FOV), capable of detecting through at least one sensor of the wearable electronic device, of the wearable electronic device.

According to an embodiment, recognizing a type of a first object among the plurality of objects.

According to an embodiment, identifying whether the first object is a real object or a virtual object.

According to an embodiment, determining a first risk level of the first object, based on the recognized type of the first object and whether the first object is the real object or the virtual object.

According to an embodiment, determining a first distance related to the first object, based on the first risk level of the first object.

According to an embodiment, providing feedback based on the first risk level of the first object, based on a distance between the first object and a user's body being less than or equal to the first distance.

Other aspects, advantages, and salient features of the disclosure will become apparent to those skilled in the art from the following detailed description, which, taken in conjunction with the annexed drawings, discloses various embodiments of the disclosure.

### BRIEF DESCRIPTION OF DRAWINGS

The above and other aspects, features, and advantages of certain embodiments of the disclosure will be more apparent from the following description taken in conjunction with the accompanying drawings, in which:
FIG. 1 is a block diagram of an electronic device in a network environment according to an embodiment.
FIG. 2 is a perspective view illustrating an internal configuration of a wearable electronic device according to an embodiment.
FIG. 3 is a diagram illustrating a front surface of a wearable electronic device according to an embodiment.
FIG. 4 is a diagram illustrating a rear surface of a wearable electronic device according to an embodiment.
FIG. 5 is another perspective view of a wearable electronic device according to an embodiment.
FIG. 6 is a schematic diagram illustrating an object recognition operation of an electronic device according to an embodiment.
FIG. 7 is a schematic diagram illustrating a configuration of an electronic device according to an embodiment.
FIG. 8 is a flowchart illustrating an operation of recognizing an object and providing a feedback related to the object of an electronic device according to an embodiment.
FIG. 9 is a diagram illustrating a recognition range of a real object and a virtual object according to an embodiment.
FIG. 10 is a diagram illustrating an operation of identifying a risk of an object of an electronic device according to an embodiment.
FIG. 11 is a diagram illustrating a boundary area based on a risk of an object according to an embodiment.
FIG. 12 is a flowchart illustrating an operation of changing a boundary area according to characteristics of an object according to an embodiment.
FIG. 13 is a diagram illustrating a boundary area changed according to characteristics of an object according to an embodiment.
FIG. 14A is a diagram illustrating a feedback operation of an electronic device when a user's body approaches an object according to an embodiment.
FIG. 14B is a diagram illustrating a feedback operation of an electronic device when a user's body approaches an object according to an embodiment.
FIG. 15 is a flowchart illustrating an operation of changing a boundary area according to an approach speed of a user according to an embodiment.
FIG. 16 is a diagram illustrating a boundary area changed according to a user's approach speed according to an embodiment.
FIG. 17A is a diagram illustrating a boundary area of a real object and a virtual object based on the real object according to an embodiment.
FIG. 17B is a diagram illustrating a boundary area of a real object and a virtual object based on the real object according to an embodiment.

The same reference numerals are used to represent the same elements throughout the drawings.

### MODE FOR CARRYING OUT THE INVENTION

The following description with reference to the accompanying drawings is provided to assist in a comprehensive understanding of various embodiments of the disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the disclosure. Accordingly, it should be apparent to those skilled in the art that the following description of various embodiments of the disclosure is provided for illustration purpose only and not for the purpose of limiting the disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

It should be appreciated that the blocks in each flowchart and combinations of the flowcharts may be performed by one or more computer programs which include computer-executable instructions. The entirety of the one or more computer programs may be stored in a single memory device or the one or more computer programs may be divided with different portions stored in different multiple memory devices.

Any of the functions or operations described herein can be processed by one processor or a combination of processors. The one processor or the combination of processors is circuitry performing processing and includes circuitry like an application processor (AP, e.g., a central processing unit (CPU)), a communication processor (CP, e.g., a modem), a graphical processing unit (GPU), a neural processing unit (NPU) (e.g., an artificial intelligence (AI) chip), a wireless-fidelity (Wi-Fi) chip, a Bluetooth^{™} chip, a global positioning system (GPS) chip, a near field communication (NFC) chip, connectivity chips, a sensor controller, a touch controller, a finger-print sensor controller, a display drive integrated circuit (IC), an audio CODEC chip, a universal serial bus (USB) controller, a camera controller, an image processing IC, a microprocessor unit (MPU), a system on chip (SoC), an IC, or the like.

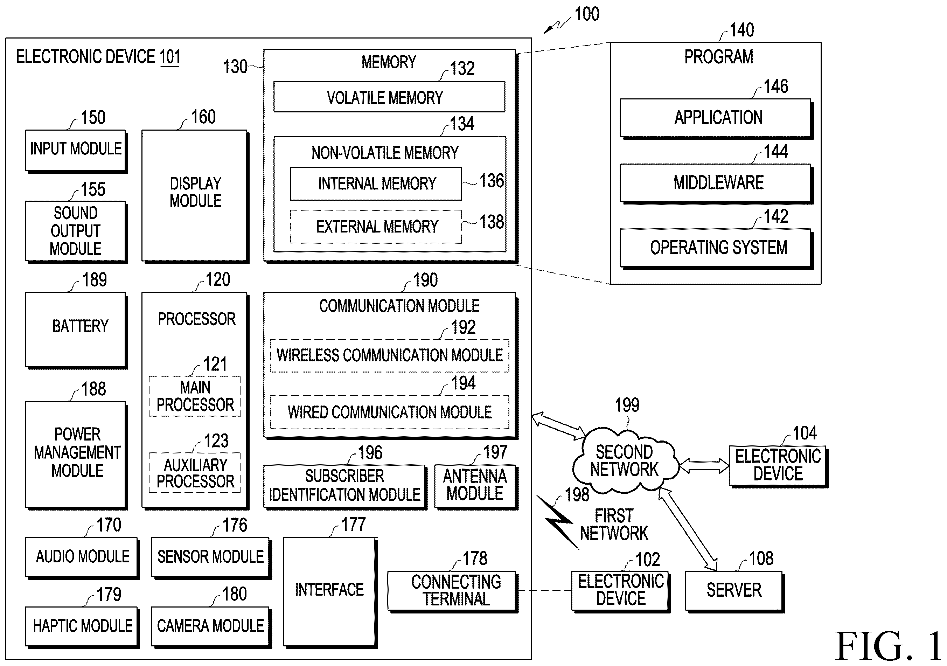

FIG. 1 is a block diagram illustrating an electronic device 101 in a network environment 100 according to an embodiment. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to an embodiment, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

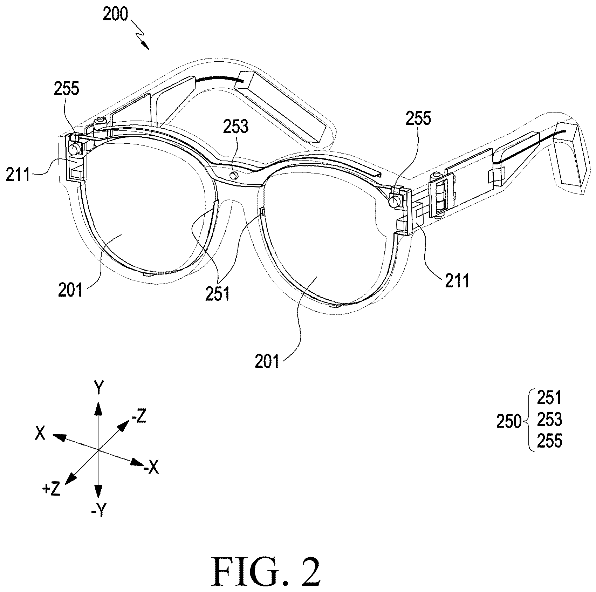

FIG. 2 is a perspective view illustrating an internal configuration of a wearable electronic device according to an embodiment.

Referring to FIG. 2, a wearable electronic device 200 according to an embodiment may include at least one of a light output module 211, a display member 201, and a camera module 250.

According to an embodiment, the light output module 211 may include a light source capable of outputting an image, and a lens for guiding the image to the display member 201. According to an embodiment, the light output module 211 may include at least one of a liquid crystal display (LCD), a digital mirror device (DMD), a liquid crystal on silicon (LCoS), an organic light emitting diode (OLED), or a micro light emitting diode (micro LED).

According to an embodiment, the display member 201 may include an optical waveguide (e.g., a waveguide). According to an embodiment, the output image of the light output module 211 incident on one end of the light waveguide may be propagated inside the light waveguide and provided to a user. According to an embodiment, the optical waveguide may include at least one of a diffractive optical element (DOE), a holographic optical element (HOE), or a reflective element (e.g., a reflective mirror). For example, the optical waveguide may guide the image output from the light output module 211 to the user's eyes by using at least one diffractive element or reflective element.

According to an embodiment, the camera module 250 may capture a still image and/or a moving image. According to an embodiment, the camera module 250 may be disposed in the lens frame and may be disposed around the display member 201.

According to an embodiment, a first camera module 251 may capture and/or recognize a trajectory of the user's eyes (e.g., pupil, iris), or gaze. According to an embodiment, the first camera module 251 may periodically or nonperiodically transmit information (e.g., trajectory information) related to the trajectory of the user's eyes or gaze to a processor (e.g., the processor 120 of FIG. 1).

According to an embodiment, a second camera module 253 may capture an external image.

According to an embodiment, a third camera module 255 may be used for hand detection and tracking, and recognition of a user's gesture (e.g., a hand gesture). The third camera module 255 according to an embodiment may be used for 3 degrees of freedom (3DoF), head tracking of 6DoF, location (space, environment) recognition, and/or movement recognition. The second camera module 253 may be used for hand detection and tracking according to an embodiment and recognition of the user's gesture. According to an embodiment, at least one of the first camera module 251 to the third camera module 255 may be replaced with a sensor module (e.g., a LiDAR sensor). For example, the sensor module may include at least one of a vertical-cavity surface-emitting laser (VCSEL), an infrared sensor, and/or a photodiode.

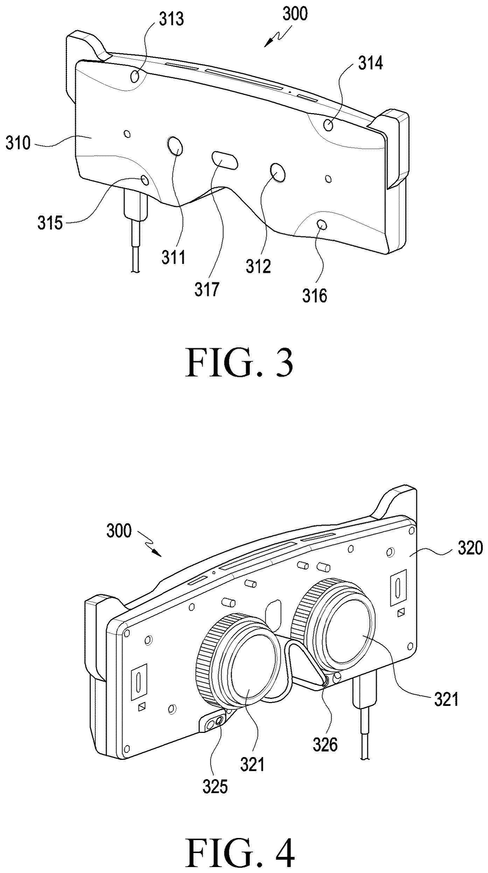

FIG. 3 is a diagram illustrating a front surface of a wearable electronic device according to an embodiment.

FIG. 4 is a diagram illustrating a rear surface of a wearable electronic device according to an embodiment.

Referring to FIGS. 3 and 4, in an embodiment, camera modules 311, 312, 313, 314, 315, and 316 for acquiring information related to the surrounding environment of a wearable electronic device 300 and/or a depth sensor 317 may be disposed on the first surface 310 of the housing.

In an embodiment, the camera modules 311 and 312 may acquire an image related to the surrounding environment of the wearable electronic device.

In an embodiment, the camera modules 313, 314, 315, and 316 may acquire an image while the wearable electronic device is worn by a user. The camera modules 313, 314, 315, and 316 may be used for hand detection, tracking, and recognition of the user's gesture (e.g., a hand gesture). The camera modules 313, 314, 315, and 316 may be used for 3DoF, head tracking of 6DoF, location (space, environment) recognition, and/or movement recognition. In an embodiment, the camera modules 311 and 312 may be used for hand detection and tracking, and the user's gesture.

In an embodiment, the depth sensor 317 may be configured to transmit a signal and receive a signal reflected from a subject, and may be used for identifying a distance from an object, such as a time of flight (TOF). Instead of or additionally to the depth sensor 217, camera modules 213, 214, 215, and 216 may identify the distance to the object.

According to an embodiment, face recognition camera modules 325 and 326 and/or a display 321 (and/or a lens) may be disposed on the second surface 320 of the housing.

In an embodiment, the face recognition camera modules 325 and 326 adjacent to the display may be used for recognizing a user's face or may recognize and/or track the user's eyes.

In an embodiment, the display 321 (and/or a lens) may be disposed on the second surface 320 of the wearable electronic device 300. In an embodiment, the wearable electronic device 300 may not include the camera modules 315 and 316 among the plurality of camera modules 313, 314, 315, and 316. Although not illustrated in FIGS. 3 and 4, the wearable electronic device 300 may further include at least one of the configurations illustrated in FIG. 2.

As described above, the wearable electronic device 300 according to an embodiment may have a form factor for being worn on the user's head. The wearable electronic device 300 may further include a strap for being fixed on the user's body, and/or a wearing member. The wearable electronic device 300 may provide a user experience based on augmented reality, virtual reality, and/or mixed reality while being worn on the user's head.

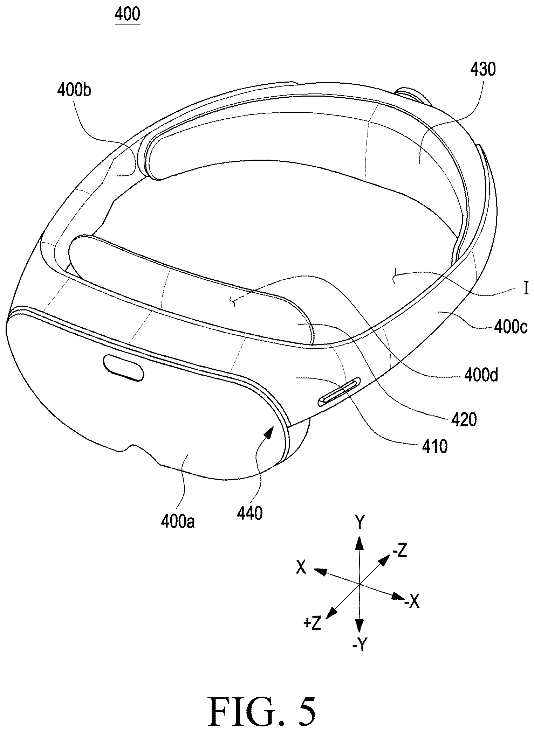

FIG. 5 is another perspective view of an electronic device according to an embodiment.

Referring to FIG. 5, an electronic device 400 may be a head mounting device (HMD) capable of providing an image in front of a user's eyes. The configuration of the electronic device 400 of FIG. 5 may be entirely or partially the same as the configuration of the wearable electronic device 200 of FIG. 2.

According to an embodiment, the electronic device 400 may form an exterior of the electronic device 400 and include first housing 410, second housing 420, and third housing 430 capable of providing a space in which components of the electronic device 400 may be disposed.

According to an embodiment, the electronic device 400 may include a first housing 410 capable of surrounding at least a part of a user's head. According to an embodiment, the first housing 410 may include a first surface 400a facing the outside of the electronic device 400 (e.g., in the +Z direction).

According to an embodiment, the first housing 410 may surround at least a part of the inner space I. For example, the first housing 410 may include a second surface 400b facing the inner space I of the electronic device 400 and a third surface 400c opposite to the second surface 400b. According to an embodiment, the first housing 410 may be coupled to the third housing 430 to form a closed curve shape surrounding the inner space I.

According to an embodiment, the first housing 410 may accommodate at least some of components of the electronic device 400. For example, a light output module and a circuit board may be disposed in the first housing 410.

According to an embodiment, one display member 440 corresponding to the left eye and the right eye of the electronic device 400 may be included. The display member 440 may be disposed in the first housing 410. The configuration of the display member 440 of FIG. 5 may be entirely or partially the same as the configuration of the display member 201 of FIG. 2.

According to an embodiment, the electronic device 400 may include a second housing 420 that may be placed on the user's face. According to an embodiment, the second housing 420 may include a fourth surface 400d capable of at least partially facing the user's face. According to an embodiment, the fourth surface 400d may be a surface in a direction (e.g., -Z direction) facing the inner space I of the electronic device 400. According to an embodiment, the second housing 420 may be coupled to the first housing 410.

According to an embodiment, the electronic device 400 may include a third housing 430 that may be placed on the back of the user's head. According to an embodiment, the third housing 430 may be coupled to the first housing 410. According to an embodiment, the third housing 430 may accommodate at least some of the components of the electronic device 400. For example, a battery (e.g., the battery 189 of FIG. 1) may be disposed in the third housing 430.

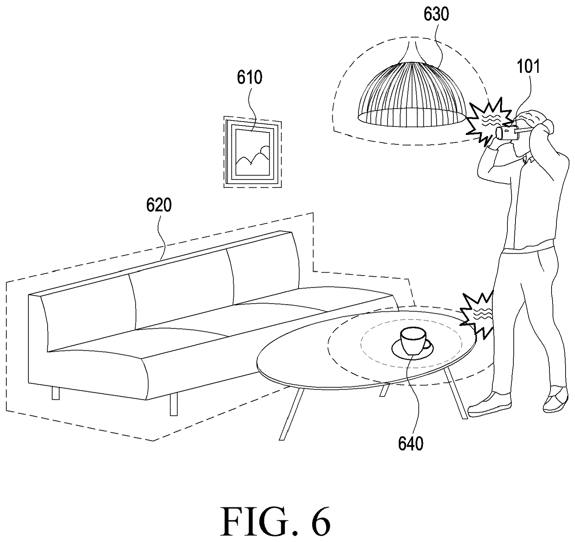

FIG. 6 is a schematic diagram illustrating an object recognition operation of an electronic device according to an embodiment.

Referring to FIG. 6, an electronic device (or a wearable electronic device) 101 (e.g., the electronic device 101 of FIG. 1, the wearable electronic device 200 of FIG. 2, the wearable electronic device 300 of FIG. 3, the wearable electronic device 300 of FIG. 4, or the electronic device 400 of FIG. 5) may recognize a plurality of objects 610, 620, 630, and 640 disposed in a space. For example, the electronic device 101 may recognize the plurality of objects 610, 620, 630, and 640 included in an area that may be detected by the electronic device 101 and/or a field of view displayed on the display (e.g., the display module 160 of FIG. 1) of the electronic device 101.

According to an embodiment, the plurality of objects 610, 620, 630, and 640 may include virtual objects 610 and 620, and real objects 630 and 640.

According to an embodiment, the electronic device 101 may identify the risk level, based on the recognized characteristics of the plurality of objects 610, 620, 630, and 640. For example, virtual objects 610 and 620 that are not at risk of being hit by the user may be identified as low risk level, and real objects 630 and 640 that are at risk of being hit by the user may be identified as high risk level. According to an embodiment, the risk level of the object may be adjusted according to the context with the user, such as the purpose of the object.

According to an embodiment, the electronic device 101 may configure a boundary area surrounding each object, based on the risk level of the plurality of objects 610, 620, 630, and 640.

According to an embodiment, when the user's body approaches within the boundary area, the electronic device 101 may provide feedback (e.g., visual UI (e.g., highlight), sound, and vibration).

Accordingly, it is possible to prevent confusion between the real object and the virtual object and reduce the risk that may occur according to the user's behavior in the virtual environment.

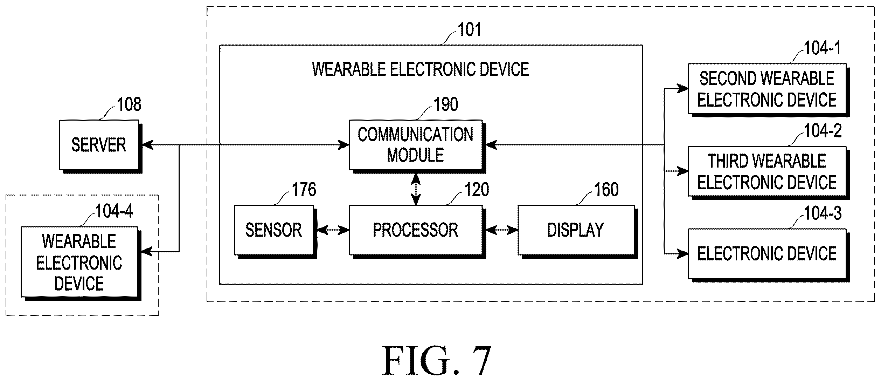

Hereinafter, in FIGS. 7 to 13, 14A, 14B, 15, 16, 17A, and 17B, an operation of recognizing objects and providing feedback of the electronic device will be described below.

FIG. 7 is a schematic diagram illustrating a configuration of an electronic device according to an embodiment.

Referring to FIG. 7, a wearable electronic device 101 (e.g., the electronic device 101 of FIG. 1, the wearable electronic device 200 of FIG. 2, the wearable electronic device 300 of FIG. 3, the wearable electronic device 300 of FIG. 4, or the electronic device 400 of FIG. 5) may include a processor 120 (e.g., the processor 120 of FIG. 1), a display module 160 (e.g., the display module 160 of FIG. 1), a sensor module 176 (e.g., the sensor module 176 of FIG. 1, the camera module 180 of FIG. 1, the second camera module 253 of FIG. 2, the third camera module 255 of FIG. 2, the camera modules 311, 312, 313, 314, 315, and 316 of FIG. 3, and the depth sensor 317 of FIG. 3), and a communication module 190 (e.g., the communication module 190 of FIG. 1).

According to an embodiment, the wearable electronic device 101 may communicate with external electronic devices through the communication module 190 under the control of the processor 120. For example, the wearable electronic device 101 may communicate with at least one of a second wearable electronic device 104-1 (e.g., the electronic device 104 of FIG. 1) and a third wearable electronic device 104-2 (e.g., the electronic device 104 of FIG. 1) worn by the user of the wearable electronic device 101, an electronic device 104-3 (e.g., the electronic device 104 of FIG. 1) (e.g., a smartphone or a tablet PC) being used by the user of the wearable electronic device 101, the server 108 (e.g., the server 108 of FIG. 1), or a wearable electronic device 104-4 (e.g., the electronic device 104 of FIG. 1) of another user through the communication module 190.

According to an embodiment, the wearable electronic device 101 may identify a real object included in the space in which the wearable electronic device 101 is disposed through the sensor module 176 under the control of the processor 120. For example, the sensor module 176 may include an image sensor and/or a proximity sensor. For example, the wearable electronic device 101 may recognize a real object included in the image based on an image acquired through a camera including the image sensor. For example, the wearable electronic device 101 may transmit the image acquired through the camera to the server 108 and receive information on the real object included in the image from the server 108. According to an embodiment, the wearable electronic device 101 may detect the existence of the real object through the proximity sensor and/or identify a distance from the real object.

According to an embodiment, the wearable electronic device 101 may acquire information on the real object included in the space from the wearable electronic device 104-4 of another user through the communication module 190. In this way, even if the wearable electronic device 101 does not detect the space, information on the real object may be acquired based on detection information on the space received from another wearable electronic device 104-4.

According to an embodiment, the wearable electronic device 101 may display an image of a real space acquired through a camera (e.g., the camera module 180 of FIG. 1) on the display module 160 under the control of the processor 120. According to an embodiment, the wearable electronic device 101 may display a virtual object on the image by a user input or a manufacturer configuration. According to an embodiment, the wearable electronic device 101 may acquire information on the virtual object included in the image displayed on the display module 160.

According to an embodiment, the wearable electronic device 101 may identify the risk level of each of the real object and the virtual object. According to an embodiment, the wearable electronic device may acquire a boundary area for each of the real object and the virtual object based on the risk level. For example, the wearable electronic device 101 may receive the risk level for each of the real object and the virtual object from the server 108. The risk level may be a degree of risk that may be caused by an object when the user moves. The boundary area may be in the form of surrounding an object. For example, the boundary area may be in the form of surrounding the object in contact with the surface of the object or surrounding the object at a configured distance from the surface of the object. For example, the higher the risk level of the object, the longer the configured distance may be. According to an embodiment, the boundary area for each object may or may not be displayed on the display module 160.

According to an embodiment, the wearable electronic device 101 may provide feedback based on the risk level when the user's body approaches the boundary area. For example, the feedback may include at least one of visual feedback that displays a visual UI (e.g., highlights) on the object, auditory feedback that provides a warning sound, and haptic feedback such as vibration.

According to an embodiment, the wearable electronic device 101 may identify whether the user's body approaches the boundary area through the sensor module 176. For example, the wearable electronic device 101 may identify whether the user's body, such as a hand, approaches the boundary area through a camera including an image sensor and/or a proximity sensor. For example, the wearable electronic device 101 may determine whether the user's body approaches the boundary area based on the movement of the wearable electronic device 101 through a GPS sensor, a gyro sensor, and/or an acceleration sensor.

According to an embodiment, the wearable electronic device 101 may identify whether the second wearable electronic device 104-1 or the third wearable electronic device 104-2 is worn, the electronic device 104-3 is held, or a body (e.g., when a smartphone is located in the pocket) close to the electronic device 104-3 approaches the boundary area, based on location information (or motion information) of the second wearable electronic device 104-1, the third wearable electronic device 104-2, and/or the electronic device 104-3 received through the communication module 190.

According to an embodiment, the higher the risk level of the object approached by the user's body, the stronger the intensity of the provided feedback may be. For example, the higher the risk level of the object approached by the user's body, the greater the brightness of the visual UI, the larger the size of the visual UI, the larger the volume of the warning sound, the higher the height of the warning sound, the greater the intensity of the vibration, or the faster the vibration pattern. According to an embodiment, the higher the risk level, the greater the number of types of feedback provided.

According to an embodiment, the wearable electronic device may transmit a feedback providing command to the second wearable electronic device 104-1, the third wearable electronic device 104-2 and/or the electronic device 104-3 through the communication module 190. According to an embodiment, the second wearable electronic device 104-1, the third wearable electronic device 104-2 and/or the electronic device 104-3 receiving the feedback providing command may provide visual, auditory, and/or tactile feedback. For example, feedback may be sequentially provided through the second wearable electronic device 104-1, the third wearable electronic device 104-2, and/or the electronic device 104-3, thereby providing a direction in which the object is located.

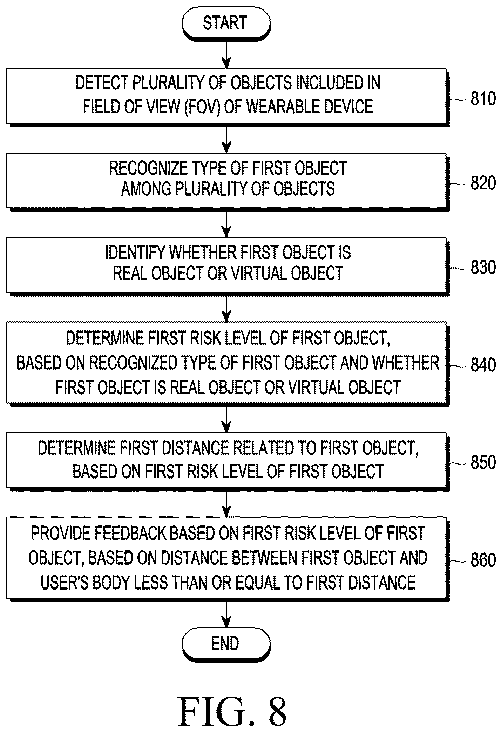

FIG. 8 is a flowchart illustrating an operation of recognizing an object and providing a feedback related to the object of an electronic device according to an embodiment.

Referring to FIG. 8, in operation 810, an electronic device (or a wearable electronic device) (e.g., the electronic device 101 of FIG. 1, the wearable electronic device 200 of FIG. 2, the wearable electronic device 300 of FIG. 3, the wearable electronic device 300 of FIG. 4, or the electronic device 400 of FIG. 5) may detect a plurality of objects included in a field of view (FOV) of the wearable electronic device that may be detected through at least one sensor (e.g., the sensor module 176 of FIG. 1, the camera module 180 of FIG. 1, the second camera module 253 of FIG. 2, the third camera module 255 of FIG. 2, the camera modules 311, 312, 313, 314, 315, and 316 of FIG. 3, and the depth sensor 317 of FIG. 3).

According to an embodiment, the electronic device may detect at least one real object included in an area (or a field of view (FOV) of the real object) that may be detected through at least one sensor through at least one sensor in real space. For example, the area that may be detected through at least one sensor may be wider than the field of view displayed by the display (e.g., the display module 160 of FIG. 1). For example, the area that may be detected through at least one sensor may be the entire area surrounding the electronic device.

According to an embodiment, the electronic device may detect at least one virtual object included in the second FOV corresponding to the area displayed on the display.

According to an embodiment, because information on the virtual object included in the image is stored in the electronic device, the electronic device may acquire information on the virtual object included in the field of view (or the FOV of the virtual object or the second FOV) displayed on the display. For example, the information on the virtual object may include a type of the virtual object and or location information of the virtual object. According to an embodiment, the information on the virtual object may further include at least a part of the area that may be detected through at least one sensor as well as a field of view displayed on the display.

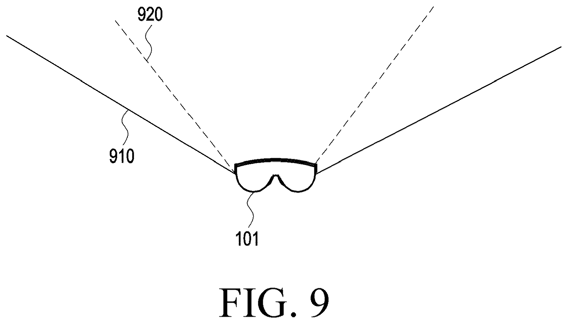

According to an embodiment, the recognition ranges of the real object and the virtual object will be described with reference to FIG. 9.

According to an embodiment, the electronic device may receive information on a space from an electronic device (or a wearable electronic device) of another user. For example, the information on the space may include structure information of the space acquired by another user's electronic device and recognition information of the real object. For example, the recognition information of the real object may include information on the type and/or location of the real object. In this way, by acquiring information on a space through an external electronic device, it is possible to acquire information on the space and the real object disposed in the space without the electronic device directly detecting the space.

According to an embodiment, in operation 820, the electronic device may recognize the type of the first object among a plurality of objects. For example, the electronic device may recognize types of a plurality of objects through image recognition. For example, information on the type of the object may include information on what the object is (e.g., sofa, hot coffee, cold coffee, lighting).

According to an embodiment, in operation 830, the electronic device may identify whether the first object is a real object or a virtual object. For example, the electronic device may identify that the first object is a real object if the first object is detected by at least one sensor. When detecting the first object through information on the virtual object included in the image or detecting the first object through image recognition, the electronic device may identify that the first object is a virtual object.

According to an embodiment, the electronic device may identify risk levels of a plurality of objects including at least one real object and at least one virtual object displayed on the display, based on a configured condition.

According to an embodiment, in operation 840, the electronic device may determine the first risk level of the first object, based on the recognized type of the first object and whether the first object is a real object or a virtual object.

According to an embodiment, the electronic device may differentially configure the risk level of each object based on the characteristics of the objects.

For example, depending on whether the object is a real object or a virtual object, the electronic device may identify a high risk level because there is a risk of being hit by the user's motion when the object is a real object. For example, the electronic device may identify sharp, breakable, or hot objects as having a higher risk level than other real objects because they may injure the user.

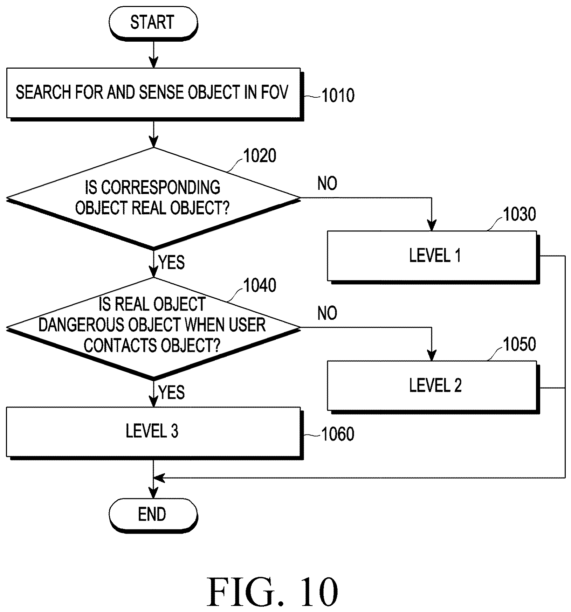

According to an embodiment, an operation of identifying the risk level based on the characteristics of the object will be described with reference to FIG. 10.

According to an embodiment, the electronic device may determine the risk level of the virtual object based on the user's usage environment related to the virtual object among the virtual objects.

For example, if the virtual object is a sofa, there is a possibility that the user may be injured when sitting on a virtual sofa rather than the real object, so the virtual sofa may be identified with a higher risk level than other virtual objects. For example, if the virtual object is a wall, there is a possibility of injury when the user leans on the virtual wall rather than the real object, so the virtual wall may be identified with a higher risk level than other virtual objects.

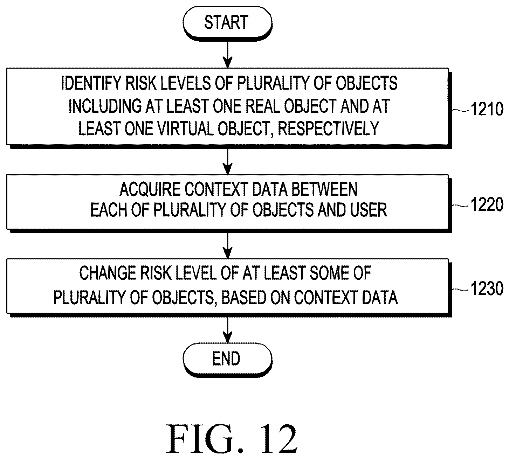

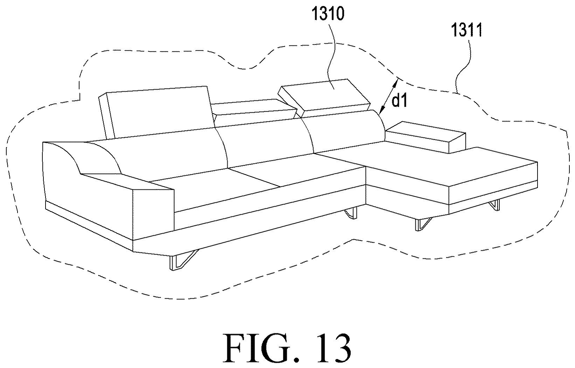

According to an embodiment, an operation of changing the risk level according to the type of the virtual object will be described with reference to FIGS. 12 and 13.

According to an embodiment, in operation 850, the electronic device may determine the first distance related to the first object, based on the first risk level of the first object. For example, the first distance may be a distance from the surface of the first object. According to an embodiment, a set of points by a specific distance (e.g., the first distance) from the surface of the object may be referred to as a boundary area.

According to an embodiment, the electronic device may acquire boundary areas surrounding a plurality of objects, respectively, based on the risk levels.

According to an embodiment, the electronic device may acquire a boundary area such that a distance between the surface of the object and the boundary increases as the risk level of the object increases. For example, the electronic device may determine that the value of the first distance increases as the risk level of the first object increases. According to an embodiment, a large distance between the surface of the object and the boundary may indicate a deep boundary depth.

For example, in the case of a virtual object, the risk of physical collision is low, so the surface of the object and the boundary area may come into contact, or the distance between the surface of the object and the boundary area may be relatively low. According to an embodiment, in the case of a real object, because a collision may occur according to a user's motion or movement, the distance between the surface of the object and the boundary area may be relatively high.

According to an embodiment, the electronic device may determine the number of boundaries, based on the risk level of the object. For example, if the number of boundaries is two or more, two or more boundaries may be located at different distances from the surface of the object. For example, the electronic device may further determine the second distance, which is a value longer than the first distance, based on the first risk level of the first object.

In the above, it has been described as acquiring a boundary area based on the risk level acquired by the characteristics of the objects, but it is not limited thereto, and a boundary area may be acquired based on the characteristics of the objects without an operation of identifying the risk level.

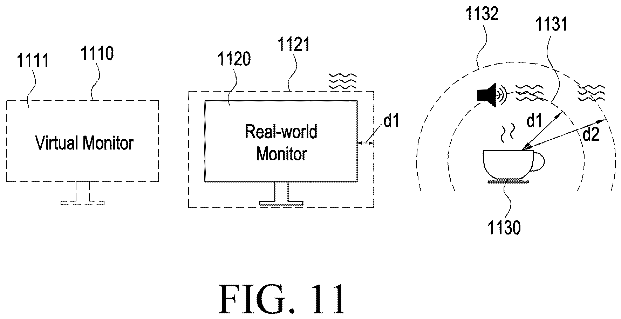

According to an embodiment, an operation of configuring a boundary area based on characteristics of an object will be described with reference to FIG. 11.

According to an embodiment, in operation 860, the electronic device may provide feedback based on the first risk level of the first object, based on the distance between the first object and the user's body less than or equal to the first distance. For example, the electronic device may provide feedback (e.g., visual UI, sound, vibration) when the distance between the first object and the user's body is less than or equal to the first distance when the user's body approaches the first object.

According to an embodiment, the electronic device may provide feedback based on a first risk level corresponding to the first boundary area, based on the identification of the user's body approaching the first boundary area among the boundary areas.

According to an embodiment, the electronic device may identify that the user's body approaches the first boundary area corresponding to the first object among a plurality of objects through at least one sensor and/or camera of the electronic device. For example, the electronic device may identify that a body, such as a user's hand, approaches within the first boundary area through a camera and/or a proximity sensor. According to an embodiment, the electronic device may detect a movement of the electronic device through a GPS sensor, a gyro sensor, and/or an acceleration sensor, and identify that the body of the user wearing the electronic device approaches within the first boundary area based on the movement of the electronic device.

According to an embodiment, the electronic device may identify the user's body approaching the first boundary area based on a detection value received from an external electronic device connected through a communication module. For example, the electronic device may receive location information and/or movement information of an external electronic device from the external electronic device including a smart watch worn on the wrist, a smart ring worn on the hand and/or a smartphone placed in the hand or in the pocket, and identify whether the user's body approaches within the first boundary area based on location information and/or movement information of the external electronic device.

According to an embodiment, the electronic device may determine the number of feedbacks, based on the risk level of the object. For example, as illustrated in Table 1 below, the higher the risk level, the greater the number of types of feedback provided.

**Table 1**

| | Layer | Visual | Haptic | Sound |
|---|---|---|---|---|
| Level 1 | Not provided | O | | |
| Level 2 | 1 depth layer | O | O | |
| Level 3 | 2 depth layer | O | O | O |

Referring to Table 1, as the risk (level) increases, the depth of the boundary area may increase. For example, the higher the risk, the longer the distance between the surface of the object and the boundary area. For example, the object of level 1 may have the same boundary area as the surface of the object (not provided). In the object of level 2, the distance between the surface of the object and the boundary area may be a first distance (e.g., 1 depth layer). In the object of level 3, the distance between the surface of the object and the boundary area may be a second distance (e.g., 2 depth layer) longer than the first distance. According to an embodiment, as the risk level increases, the types of feedback may increase. For example, the electronic device may provide visual feedback for level 1, provide visual feedback and vibration feedback for level 2, and provide visual feedback, vibration feedback, and auditory feedback for level 3.

According to an embodiment, the electronic device may determine the intensity of the feedback based on the risk level of the object. For example, the higher the risk level of the object, the higher the brightness of the visual UI, the larger the volume of the visual UI, the higher the volume of the warning sound, the higher the height of the warning sound, the greater the intensity of the vibration, or the faster the vibration pattern.

For example, the electronic device may increase the intensity of the feedback as the risk (level) increases, as illustrated in Table 2 below.

**Table 2**

| | Visual | Haptic | Sound |
|---|---|---|---|
| Level 1 | O (soft visual) | | |
| Level 2 | O (strong visual) | | |
| Level 3 | O (strong visual) | O (light haptic) | |
| Level 4 | O (strong visual) | O (medium haptic) | O (light sound) |
| Level 5 | O (strong visual) | O (strong haptic) | O (strong sound) |

Table 2 states that as the risk level increases, not only the intensity of the feedback but also the number of feedbacks increases, but it is not limited thereto. According to an embodiment, even if the risk level increases, the number of feedbacks may be maintained and only the intensity of the feedback may increase. According to an embodiment, the electronic device may change the boundary area for the object, based on the speed at which the user's body approaches the object. For example, when the user's body approaches a real object or a virtual object at a speed greater than or equal to a configured value, the electronic device may change the boundary area acquired for the object to correspond to a higher risk level. For example, when the user's body approaches a real object or a virtual object at a speed greater than or equal to a configured value, the electronic device may modify the boundary area so that the distance between the surface of the object and the boundary area is wider, or acquire one more boundary area having a wider distance between the surface of the object and the boundary area.

According to an embodiment, when it is detected that the user's body is approaching the object at a specified speed or faster, the electronic device may change the boundary area of the corresponding object in real time.

For example, the electronic device may change the risk level of the object according to the existing risk level (or risk weight) of the object and the user's approach speed, as illustrated in Table 3. According to an embodiment, the electronic device may change the boundary area, based on the changed risk level.

**Table 3**

| | Risk weight 1 (low) | Risk weight 2 (medium) | Risk weight 3 (high) |
|---|---|---|---|
| Speed 1 (slow) | Level 1 | Level 2 | Level 3 |
| Speed 2 (medium) | Level 2 | Level 3 | Level 4 |
| Speed 3 (fast) | Level 3 | Level 4 | Level 5 |

Referring to Table 3, when the risk level of an object is identified as level 1, level 2, and level 3, respectively, the electronic device may maintain level 1, level 2, and level 3 respectively when a user approaches at a slow first speed. According to an embodiment, when the user approaches at a second speed greater than or equal to a configured speed, the risk level may be increased one step by one and changed to level 2, level 3, and level 4, respectively. The electronic device may change the boundary area of each object based on the changed risk level.

According to an embodiment, when the user approaches at a third speed that is faster than or equal to the configured speed and is faster than the second speed, the risk level may be increased one step by one and changed to level 3, level 4, and level 5, respectively. The electronic device may change the boundary area of each object based on the changed risk level.

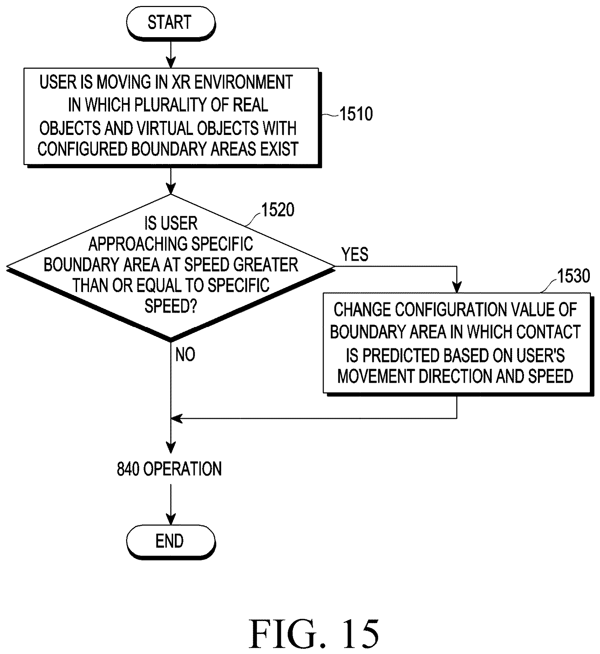

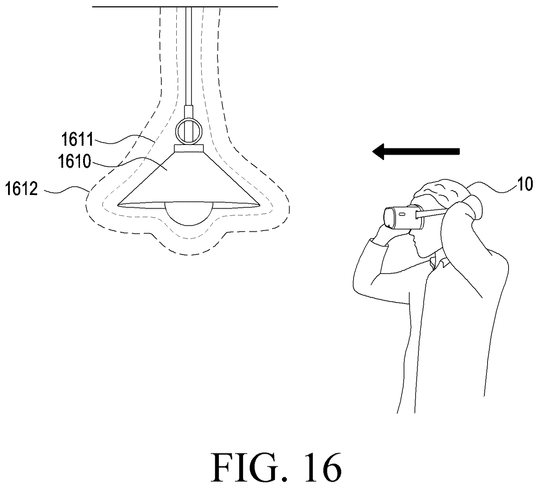

According to an embodiment, an embodiment of changing the boundary area of the object based on the user's approach speed will be described with reference to FIGS. 15 and 16.

According to an embodiment, when two or more types of feedback are provided, the electronic device may provide visual feedback, vibration feedback, and auditory feedback in that order.

According to an embodiment, the electronic device may transmit a command for providing feedback to an external device connected through a communication module. For example, the electronic device may transmit commands to provide feedback (e.g., visual, vibratory, audible) to a connected smart watch, a smart ring, and/or a smartphone through a communication module. According to an embodiment, the electronic device may synchronize the timing of providing feedback with an external electronic device.

According to an embodiment, the electronic device may provide location information (e.g., direction and/or distance) of an object through feedback in conjunction with an external electronic device. For example, the electronic device and the external electronic device may provide information on the location of the object by sequentially providing vibration feedback. The electronic device and the external electronic device may sequentially provide auditory feedback to provide information on the location of the object.

According to an embodiment, when the electronic device moves a virtual object based on a user input, the electronic device may provide feedback. For example, when a virtual object is held, removed from the surface of another object, attached to the surface of another object, dragged within a specific surface, or released after the movement of the virtual object is completed, the electronic device may provide feedback (e.g., visual, vibration, and auditory).

According to an embodiment, the electronic device may provide a strong feedback as the weight increases based on the weight of the real object corresponding to the virtual object, thereby providing an experience similar to the real environment even when the virtual object is moved. According to an embodiment, the electronic device may determine the intensity of the feedback based on characteristics (e.g., friction, inclination, and unevenness) of the surface on which the virtual object moves.

According to an embodiment, when the virtual object is attached to the real object, the electronic device may notify that the object being accessed by the virtual object is the real object by providing feedback corresponding to the risk level of the real object when the electronic device approaches the boundary area of the real object.

FIG. 9 is a diagram illustrating a recognition range of a real object and a virtual object according to an embodiment.

Referring to FIG. 9, an electronic device (or a wearable electronic device) 101 (e.g., the electronic device 101 of FIG. 1, the wearable electronic device 200 of FIG. 2, the wearable electronic device 300 of FIG. 3, the wearable electronic device 300 of FIG. 4, or the electronic device 400 of FIG. 5) may identify a real object in a real space and a virtual object in a virtual environment.

According to an embodiment, a detection range of the real object and a detection range of the virtual object may be different.

For example, the electronic device 101 may identify at least one real object included in a real space through at least one sensor (e.g., the sensor module 176 of FIG. 1, the camera module 180 of FIG. 1, the second camera module 253 of FIG. 2, the third camera module 255 of FIG. 2, the camera modules 311, 312, 313, 314, 315, and 316 of FIG. 3, and the depth sensor 317 of FIG. 3).

According to an embodiment, the electronic device 101 may detect at least one real object included in the area 910 in which at least one sensor may be detected. For example, the area 910 in which at least one sensor may be detected may be the entire peripheral area surrounding the electronic device 101. For example, the electronic device 101 may configured a boundary area based on the risk level of a real object not displayed on the display. According to an embodiment, the electronic device 101 may provide feedback when the user's body approaches the boundary area even in the case of the real object not being displayed on the display.

According to an embodiment, the electronic device 101 may preferentially configure a boundary area based on the risk level of the real object included in a field of view 920 corresponding to an image displayed on the display. According to an embodiment, the electronic device 101 may provide feedback when the user's body approaches the boundary area even when the boundary area disappears from the field of view 920.

According to an embodiment, the electronic device 101 may identify at least one virtual object included in the image displayed on the display (e.g., the display module 160 of FIG. 1). For example, the electronic device 101 may identify at least one object included in the field of view 920 corresponding to the image displayed on the display. According to an embodiment, because the electronic device 101 stores information on all virtual objects disposed in the virtual space, not only the space displayed on the display but also the virtual objects disposed in the space not displayed may be identified. For example, the electronic device 101 may configure a boundary area based on the risk level even for a virtual object not displayed on the display. According to an embodiment, even in the case of a virtual object that is not displayed on the display, the electronic device 101 may provide feedback when the user's body approaches the boundary area.

According to an embodiment, the electronic device 101 may preferentially configure a boundary area based on the risk level of a virtual object included in the field of view 920 corresponding to an image displayed on the display. According to an embodiment, even when the boundary area disappears from the field of view 920, the electronic device 101 may provide feedback when the user's body approaches the boundary area.

According to an embodiment, the field of view 920 corresponding to the image displayed on the display may be included in the area 910 that may be detected by at least one sensor.

In this way, in the case of a real object, the user needs to recognize the real object even if it is not displayed on the display, whereas in the case of a virtual object, because there is no physical effect on the user, the virtual object not displayed on the display may not be identified. By identifying the only virtual object displayed on the display, resources consumed to identify the virtual object may be reduced.

FIG. 10 is a diagram illustrating an operation of identifying a risk of an object of an electronic device according to an embodiment.

FIG. 11 is a diagram illustrating a boundary area based on a risk of an object according to an embodiment.

Referring to FIG. 10, in operation 1010, an electronic device (or a wearable electronic device) 101 (e.g., the electronic device 101 of FIG. 1, the wearable electronic device 200 of FIG. 2, the wearable electronic device 300 of FIG. 3, the wearable electronic device 300 of FIG. 4, or the electronic device 400 of FIG. 5) may identify an object in a FOV. For example, the electronic device may identify at least one real object included in a area that may be detected by at least one sensor (e.g., the sensor module 176 of FIG. 1, the camera module 180 of FIG. 1, the second camera module 253 of FIG. 2, the third camera module 255 of FIG. 2, the camera modules 311, 312, 313, 314, 315, and 316 of FIG. 3, and the depth sensor 317 of FIG. 3). According to an embodiment, the electronic device may identify at least one virtual object included in the virtual space displayed on the display (e.g., the display module 160 of FIG. 1).

According to an embodiment, in operation 1020, the electronic device may identify whether the object is a real object. According to an embodiment, if the object is not a real object (operation 1020-No), in operation 1030, the electronic device may determine the risk level of the object as level 1. For example, as illustrated in FIG. 11, level 1 may be a risk level of providing only visual feedback when the surface of an object 1110 and a boundary area 1111 coincide with each other and the user's body approaches within the boundary area.

According to an embodiment, if the object is a real object (operation 1020-Yes), in operation 1040, the electronic device may identify whether the real object is a dangerous object when the user contacts the object. For example, if the object is sharp, fragile, or hot, the electronic device may identify the object as a dangerous object when the user contacts the object.

According to an embodiment, if it is identified that the object is not a dangerous object when the user contacts the object (operation 1040-No), in operation 1050, the electronic device may determine the risk level of the object as level 2. For example, as illustrated in FIG. 11, level 2 may be a level having increased intensity and/or number of feedbacks provided than level 1, when the distance between the surface of an object 1120 and a boundary area 1121 is a first distance (e.g., d1) and the user's body approaches within the boundary area. For example, level 2 may be a risk level of providing visual feedback and vibration feedback when the user's body approaches within the boundary area.

According to an embodiment, if it is identified that the object is a dangerous object when the user contacts the object (operation 1040-Yes), in operation 1060, the electronic device may determine the risk level of the object as level 3. For example, as illustrated in FIG. 11, level 3 may be a level having increased intensity and/or number of feedbacks provided than level 2, when the distance between the surface of an object 1130 and a second boundary area 1132 is a second distance (e.g., d2) longer that the first distance, and the user's body approaches within the boundary area. For example, level 3 may be a risk level of providing visual feedback, vibration feedback, and auditory feedback when the user's body approaches within the boundary area.

According to an embodiment, in level 3, two or more boundary areas may be configured for the object 1130. For example, level 3 may be a risk level of configuring a first boundary area 1131 having a first distance from the surface of the object 1130 and the second boundary area 1132 having a second distance greater than the first distance. According to an embodiment, when the user's body approaches within the second boundary area 1132, the electronic device may provide visual feedback and vibration feedback. According to an embodiment, when the user's body approaches within the first boundary area 1131, the electronic device may provide visual feedback, vibration feedback, and auditory feedback.

In this way, by differentially providing feedback when the user's body approaches according to the characteristics of the object, the user may grasp the characteristics of the object and reduce the possibility of risk that may occur when a contact occurs.

FIG. 12 is a flowchart illustrating an operation of changing a boundary area according to characteristics of an object according to an embodiment.

FIG. 13 is a diagram illustrating a boundary area changed according to characteristics of an object according to an embodiment.

Referring to FIG. 12, in operation 1210, an electronic device (or a wearable electronic device) 101 (e.g., the electronic device 101 of FIG. 1, the wearable electronic device 200 of FIG. 2, the wearable electronic device 300 of FIG. 3, the wearable electronic device 300 of FIG. 4, or the electronic device 400 of FIG. 5) may identify risk levels of a plurality of objects including the at least one real object and at least one virtual object.

According to an embodiment, in operation 1220, the electronic device may acquire context data between each of the plurality of objects and the user.

According to an embodiment, context data between the object and the user may be data related to a user's usage environment related to the object. For example, in the case of a virtual sofa that is a virtual object, the electronic device may acquire a possibility that the user may sit on the sofa through context data. For example, in the case of a virtual wall that is a virtual object, the electronic device may acquire a possibility that the user may lean against the wall through context data.

According to an embodiment, in operation 1230, the electronic device may change the risk level of at least some of the plurality of objects, based on the context data.

For example, as illustrated in FIG. 13, in the case of a virtual sofa 1310, because a dangerous situation such as falling may occur when a person sits down, the electronic device may change the risk level of the virtual sofa 1310 to be higher, unlike other virtual objects. According to an embodiment, as the risk level of the virtual sofa 1310 increases, the electronic device may acquire a boundary area 1311 to have a first distance (e.g., d1) from the surface of the virtual sofa 1310. According to an embodiment, when it is detected that the user's body approaches within the boundary area 1311 of the virtual sofa 1310, the electronic device may provide visual feedback and vibration feedback together, unlike other virtual objects that provide only visual feedback.

For example, in the case of a virtual wall, because a dangerous situation such as falling may occur when a person leans against the wall, the electronic device may change the risk level of the virtual wall to be higher, unlike other virtual objects. According to an embodiment, as the risk level of the virtual wall increases, the electronic device may acquire the boundary area to have a first distance (e.g., d1) from the surface of the virtual wall. According to an embodiment, when it is detected that the user's body approaches within the boundary area of the virtual wall, the electronic device may provide visual feedback and vibration feedback together, unlike other virtual objects that provide only visual feedback.

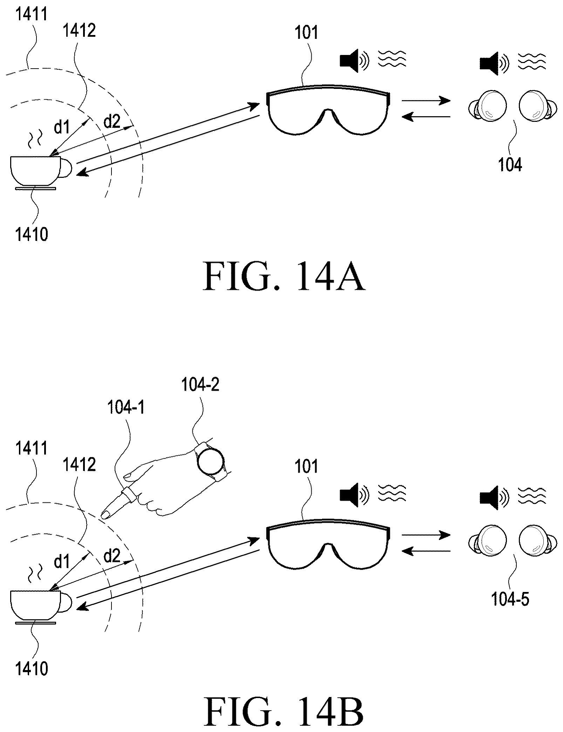

FIG. 14A is a diagram illustrating a feedback operation of an electronic device when a user's body approaches an object according to an embodiment.

Referring to FIG. 14A, an electronic device (or a wearable electronic device) 101 (e.g., the electronic device 101 of FIG. 1, the wearable electronic device 200 of FIG. 2, the wearable electronic device 300 of FIG. 3, the wearable electronic device 300 of FIG. 4, or the electronic device 400 of FIG. 5) may acquire a first boundary area 1411 and a second boundary area 1412 for a virtual object 1410 that is a hot object. For example, the first boundary area 1411 may have a first distance d1 from the surface of the virtual object 1410, and the second boundary area 1412 may have a second distance d2 from the surface of the virtual object 1410.

According to an embodiment, when it is detected that the user's body approaches within the second boundary area 1412, the electronic device 101 may provide first feedback corresponding to the second boundary area 1412 through at least one sensor (e.g., the sensor module 176 of FIG. 1, the camera module 180 of FIG. 1, the second camera module 253 of FIG. 2, the third camera module 255 of FIG. 2, the camera modules 311, 312, 313, 314, 315, and 316 of FIG. 3, and the depth sensor 317 of FIG. 3). For example, the electronic device 101 may detect whether the position of the user's hand approaches within the second boundary area 1412 through a camera or a proximity sensor. According to an embodiment, the first feedback may include visual feedback and vibration feedback.

According to an embodiment, the electronic device 101 may transmit a command for providing first feedback to the communication-connected external electronic device 104 (e.g., the electronic device 104 of FIG. 1). According to an embodiment, the external electronic device 104 may provide visual feedback and vibration feedback.

According to an embodiment, when it is detected that the user's body approaches within the first boundary area 1411, the electronic device 101 may provide second feedback corresponding to the first boundary area 1411 through at least one sensor. For example, the second feedback may include visual feedback, vibration feedback, and auditory feedback. For example, the second feedback may be stronger than the first feedback.

According to an embodiment, the electronic device 101 may transmit a command for providing second feedback to the communication-connected external electronic device 104. According to an embodiment, the external electronic device 104 may provide visual feedback, vibration feedback, and auditory feedback.

FIG. 14B is a diagram illustrating a feedback operation of an electronic device when a user's body approaches an object according to an embodiment.

Referring to FIG. 14B, an electronic device (or a wearable electronic device) 101 may acquire a first boundary area 1411 and a second boundary area 1412 for a virtual object 1410 that is a hot object. For example, the first boundary area 1411 may have a first distance d1 from the surface of the virtual object 1410, and the second boundary area 1412 may have a second distance d2 from the surface of the virtual object 1410.

According to an embodiment, when it is detected that the user's body approaches within the second boundary area 1412, the electronic device 101 may provide first feedback corresponding to the second boundary area 1412. For example, when a first external electronic device 104-1 (e.g., a smart ring) and a second external electronic device 104-2 (e.g., a smart watch) approach the virtual object 1410 while being worn on the user's hand, the first external electronic device 104-1 and the second external electronic device 104-2 may acquire location information and/or movement information through a GPS sensor, a gyro sensor, and/or an acceleration sensor included in the first external electronic device 104-1 and the second external electronic device 104-2, respectively. The first external electronic device 104-1 and the second external electronic device 104-2 may transmit location information and/or movement information to the electronic device 101.

According to an embodiment, the electronic device 101 may identify whether the body of the user wearing the first external electronic device 104-1 and the second external electronic device 104-2 approaches within the second boundary area 1412, based on the location information and/or movement information received from the first external electronic device 104-1 and the second external electronic device 104-2.

According to an embodiment, the electronic device 101 may transmit a command for providing first feedback to the communication-connected external electronic device 104-5 (e.g., the electronic device 104 of FIG. 1). According to an embodiment, the external electronic device 104-5 may provide visual feedback and vibration feedback.

According to an embodiment, when it is detected that the user's body approaches within the first boundary area 1411, the electronic device 101 may provide second feedback corresponding to the first boundary area 1411. For example, the electronic device 101 may identify whether the body of the user wearing the first external electronic device 104-1 and the second external electronic device 104-2 approaches within the first boundary area 1411, based on the location information and/or movement information received from the first external electronic device 104-1 and the second external electronic device 104-2. For example, the second feedback may include visual feedback, vibration feedback, and auditory feedback. For example, the second feedback may be stronger than the first feedback.

According to an embodiment, the electronic device 101 may transmit a command for providing second feedback to the communication-connected external electronic device 104-5. According to an embodiment, the external electronic device 104-5 may provide visual feedback, vibration feedback, and auditory feedback.

FIG. 15 is a flowchart illustrating an operation of changing a boundary area according to an approach speed of a user according to an embodiment.

FIG. 16 is a diagram illustrating a boundary area changed according to a user's approach speed according to an embodiment.

Referring to FIG. 15, in operation 1510, an electronic device (or a wearable electronic device) (e.g., the electronic device 101 of FIG. 1, the wearable electronic device 200 of FIG. 2, the wearable electronic device 300 of FIG. 3, the wearable electronic device 300 of FIG. 4, or the electronic device 400 of FIG. 5) may identify that a user is moving in a virtual environment in which a real object and a virtual object with configured boundary areas exist.

For example, the electronic device may identify that the electronic device is moving through at least one sensor (e.g., the sensor module 176 of FIG. 1, the camera module 180 of FIG. 1, the second camera module 253 of FIG. 2, the third camera module 255 of FIG. 2, the camera modules 311, 312, 313, 314, 315, and 316 of FIG. 3, and the depth sensor 317 of FIG. 3). For example, the electronic device may acquire information related to movement of the electronic device through a GPS sensor, a gyro sensor, and/or an acceleration sensor. According to an embodiment, the electronic device may identify that the electronic device is moving based on a change in the size of an object included in the real space according to movement and/or a distance from the object through a camera and/or a proximity sensor.

According to an embodiment, in operation 1520, the electronic device may identify whether the user is approaching a specific boundary area at a speed greater than or equal to the specific speed.

According to an embodiment, when the user's movement speed is greater than or equal to the specific speed (operation 1520-Yes), in operation 1530, the electronic device may change a boundary area in which contact is predicted based on the user's movement direction and speed. For example, as illustrated in FIG. 16, when the movement speed of the user 10 is greater than or equal to the specific speed, the electronic device may improve the risk level of a specific object 1610 that the user is facing and change the previously configured boundary area 1611 to a wide boundary area 1612.

According to an embodiment, when the user's movement speed is less than the specific speed (operation 1520-No), operation 840 is performed and the electronic device may identify whether the user's body has contacted the changed boundary area.

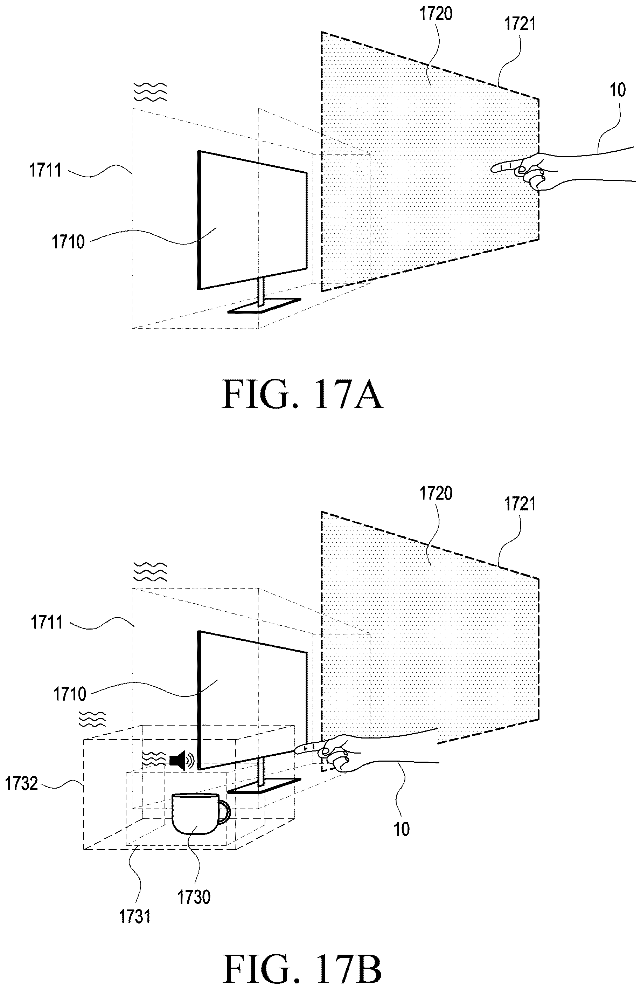

FIG. 17A is a diagram illustrating a boundary area of a real object and a virtual object based on the real object according to an embodiment.

Referring to FIG. 17A, an electronic device (or a wearable electronic device) (e.g., the electronic device 101 of FIG. 1, the wearable electronic device 200 of FIG. 2, the wearable electronic device 300 of FIG. 3, the wearable electronic device 300 of FIG. 4, or the electronic device 400 of FIG. 5) may configure a boundary area 1711 having a configured distance from a real object 1710. According to an embodiment, the boundary area 1711 is illustrated as a hexahedron, but is not limited thereto.

According to an embodiment, when the real object 1710 is a TV, a virtual screen 1720 which is a virtual object having a size larger than the display of the real object 1710 is disposed based on a user input, and an image may be displayed through the virtual screen 1720. According to an embodiment, a boundary area 1721 matching the surface of the virtual screen 1720 may be configured.

According to an embodiment, the electronic device may display an indicator (e.g., a visual cue) on the real object 1710 or the virtual screen 1720 to distinguish the real object 1710 from the virtual screen 1720.

According to an embodiment, when the speed at which the user 10 approaches the real object 1710 is greater than or equal to a configured value, the electronic device may increase the risk level of the real object 1710 to widen the boundary area 1721 and increase the type and number of feedbacks. For example, when the type of feedback is increased, the electronic device may provide visual feedback, vibration feedback, and auditory feedback in order. According to an embodiment, when the speed at which the user 10 approaches the real object 1710 is greater than or equal to a configured value, the electronic device may increase the intensity of the feedback.

FIG. 17B is a diagram illustrating a boundary area of a real object and a virtual object based on the real object according to an embodiment.

Referring to FIG. 17B, an electronic device (or a wearable electronic device) may configure a boundary area 1711 having a configured distance from a real object 1710.

According to an embodiment, when the real object 1710 is a TV, a virtual screen 1720 which is a virtual object having a size larger than the display of the real object 1710 is disposed based on a user input, and an image may be displayed through the virtual screen 1720. According to an embodiment, a boundary area 1721 matching the surface of the virtual screen 1720 may be configured.

According to an embodiment, when a dangerous real object 1730 (e.g., a hot object, a sharp object, or a fragile object) is detected in addition to the real object 1710, which is a TV, the electronic device may configure a first boundary area 1731 having a first distance from the dangerous real object 1730 and a second boundary area 1732 having a second distance greater than the first distance for the dangerous real object 1730. According to an embodiment, the first boundary area 1731 and the second boundary area 1732 are illustrated as hexahedrons, but are not limited thereto.

According to an embodiment, when the speed at which the user 10 approaches the dangerous real object 1730 is less than a configured value, the electronic device may notify that the dangerous real object 1730 is approaching by providing vibration feedback corresponding to the second boundary area 1732 of the dangerous real object 1730.

According to an embodiment, when the speed at which the user 10 approaches the dangerous real object 1730 is faster than or equal to the configured value, the electronic device may increase the risk level of the dangerous real object 1730 to widen the first boundary area 1731 and/or the second boundary area 1732, add a boundary area, and increase the type, number, and intensity of feedback. For example, when the type of feedback is increased, the electronic device may provide visual feedback, vibration feedback, and auditory feedback in order.

When there is a possibility that a risk is caused by the user's motion, notifications may be provided by adjusting the size and/or number of boundary areas and the type, number, and/or intensity of feedback in real time to notify the user of the existence of the object and reduce risk.

According to an embodiment, a wearable electronic device may include at least one sensor, a display, and at least one processor electrically connected to the at least one sensor and the display.

According to an embodiment, the at least one processor may detect a plurality of objects included in the first field of view (FOV), capable of detecting through the at least one sensor, of the wearable electronic device.

According to an embodiment, the at least one processor may recognize the type of a first object among the plurality of objects.

According to an embodiment, the at least one processor may identify whether the first object is a real object or a virtual object.

According to an embodiment, the at least one processor may determine a first risk level of the first object, based on the recognized type of the first object and whether the first object is the real object or the virtual object.

According to an embodiment, the at least one processor may determine a first distance related to the first object, based on the first risk level of the first object.

According to an embodiment, the at least one processor may provide feedback based on the first risk level of the first object, based on the fact that the distance between the first object and the user's body is less than or equal to the first distance.

According to an embodiment, the at least one processor may detect at least one real object included in the first FOV through the at least one sensor.

According to an embodiment, the at least one processor may detect at least one virtual object included in a second FOV corresponding to an area displayed on the display and included in the first FOV.

According to an embodiment, the at least one processor may determine that the value of the first distance to be greater as the risk level of the first object is higher.

According to an embodiment, the at least one processor may determine the intensity of the feedback based on the first risk level.

According to an embodiment, the at least one processor may determine the number of feedbacks, based on the first risk level.

According to an embodiment, the at least one processor may further determine a second distance that is longer than the first distance based on the first risk level.

According to an embodiment, the at least one processor may change the first distance, based on the speed at which the user's body approaches the first object.

According to an embodiment, the at least one processor may determine the risk level of the first object, based on the user's usage environment related to the first object, when the first object is a virtual object.

According to an embodiment, the wearable electronic device may further include a communication module.

According to an embodiment, the at least one processor may transmit a command for providing the feedback to an external device connected through the communication module.

According to an embodiment, the at least one processor may identify the distance between the first object and the user's body based on a detection value received from the external device connected through the communication module.

According to an embodiment, a method of controlling a wearable electronic device may include detecting a plurality of objects included in the first FOV, capable of detecting through at least one sensor of the wearable electronic device, of the wearable electronic device.

According to an embodiment, a method of controlling a wearable electronic device may include recognizing the type of a first object among the plurality of objects.

According to an embodiment, a method of controlling a wearable electronic device may include identifying whether the first object is a real object or a virtual object.

According to an embodiment, a method of controlling a wearable electronic device may include determining a first risk level of the first object, based on the recognized type of the first object and whether the first object is the real object or the virtual object.

According to an embodiment, a method of controlling a wearable electronic device may include determining a first distance related to the first object, based on the first risk level of the first object.

According to an embodiment, a method of controlling a wearable electronic device may include providing feedback based on the first risk level of the first object, based on the fact that the distance between the first object and the user's body is less than or equal to the first distance.

According to an embodiment, the detecting a plurality of objects may detect at least one real object included in the first FOV through the at least one sensor.

According to an embodiment, the detecting a plurality of objects may detect at least one virtual object included in a second FOV corresponding to an area displayed on the display of the wearable electronic device and in the first FOV.

According to an embodiment, the determining a first distance may determine that the value of the first distance to be greater as the risk level of the first object is higher.

According to an embodiment, the providing feedback may determine the intensity of the feedback based on the first risk level.

According to an embodiment, the providing feedback may determine the number of feedbacks based on the first risk level.

According to an embodiment, the determining the first distance may further determine a second distance that is longer than the first distance based on the first risk level.

According to an embodiment, the method of controlling a wearable electronic device may further include changing the first distance, based on a speed at which the user's body approaches the first object.

According to an embodiment, the determining the first risk level of the first object may determine the risk level of the first object based on the user's usage environment related to the first object, when the first object is a virtual object.

According to an embodiment, the method of controlling a wearable electronic device may further include transmitting a command for providing the feedback to an external device connected through a communication module of the wearable electronic device.

According to an embodiment, the providing feedback may identify the distance between the first object and the user's body based on a detection value received from the external device connected through the communication module of the wearable electronic device.

According to an embodiment, in a non-transitory computer-readable recording medium storing one or more programs, one or more programs may include instructions for an electronic device to detect a plurality of objects included in the first field of view (FOV), capable of detecting through at least one sensor of the wearable electronic device, of the wearable electronic device.

According to an embodiment, one or more programs may include instructions for an electronic device to recognize the type of a first object among the plurality of objects.

According to an embodiment, one or more programs may include instructions for an electronic device to identify whether the first object is a real object or a virtual object.

According to an embodiment, one or more programs may include instructions for an electronic device to determine a first risk level of the first object, based on the recognized type of the first object and whether the first object is the real object or the virtual object.

According to an embodiment, one or more programs may include instructions for an electronic device to determine a first distance related to the first object, based on the first risk level of the first object.

According to an embodiment, one or more programs may include instructions for an electronic device to provide feedback based on the first risk level of the first object, based on the fact that the distance between the first object and the user's body is less than or equal to the first distance.

According to an embodiment, one or more programs may include instructions for an electronic device to detect at least one real object included in the first FOV through the at least one sensor.

According to an embodiment, one or more programs may include instructions for an electronic device to detect at least one virtual object included in a second FOV corresponding to an area displayed on the display and in the first FOV.

According to an embodiment, one or more programs may include instructions for an electronic device to determine that the value of the first distance to be greater as the risk level of the first object is higher.

According to an embodiment, one or more programs may include instructions for an electronic device to determine the intensity of the feedback based on the first risk level.

According to an embodiment, one or more programs may include instructions for an electronic device to determine the number of feedbacks based on the first risk level.

According to an embodiment, one or more programs may include instructions for an electronic device to further determine a second distance that is longer than the first distance based on the first risk level.

According to an embodiment, one or more programs may include instructions for an electronic device to change the first distance, based on a speed at which the user's body approaches the first object.

According to an embodiment, one or more programs may include instructions for an electronic device to determine the risk level of the first object, based on the user's usage environment related to the first object, when the first object is a virtual object.

According to an embodiment, the wearable electronic device may further include a communication module.

According to an embodiment, one or more programs may include instructions for an electronic device to transmit a command for providing the feedback to an external device connected through a communication module.

According to an embodiment, one or more programs may include instructions for an electronic device to identify the distance between the first object and the user's body, based on a detection value received from the external device connected through the communication module.

The electronic device according to an embodiment may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that an embodiment of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with an embodiment of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

An embodiment as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to an embodiment of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities, and some of the multiple entities may be separately disposed in different components. According to an embodiment, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to an embodiment, operations performed by the module, the program, or another component may be carried out sequentially, in parallel, repeatedly, or heuristically, or one or more of the operations may be executed in a different order or omitted, or one or more other operations may be added.

It will be appreciated that various embodiments of the disclosure according to the claims and description in the specification can be realized in the form of hardware, software or a combination of hardware and software.

Any such software may be stored in non-transitory computer readable storage media. The non-transitory computer readable storage media store one or more computer programs (software modules), the one or more computer programs include computer-executable instructions that, when executed by one or more processors of an electronic device, cause the electronic device to perform a method of the disclosure.

Any such software may be stored in the form of volatile or non-volatile storage such as, for example, a storage device like read only memory (ROM), whether erasable or rewritable or not, or in the form of memory such as, for example, random access memory (RAM), memory chips, device or integrated circuits or on an optically or magnetically readable medium such as, for example, a compact disk (CD), digital versatile disc (DVD), magnetic disk or magnetic tape or the like. It will be appreciated that the storage devices and storage media are various embodiments of non-transitory machine-readable storage that are suitable for storing a computer program or computer programs comprising instructions that, when executed, implement various embodiments of the disclosure. Accordingly, various embodiments provide a program comprising code for implementing apparatus or a method as claimed in any one of the claims of this specification and a non-transitory machine-readable storage storing such a program.

While the disclosure has been shown and described with reference to various embodiments thereof, it will be understood by those skilled in the art that various changes in form and details may be made therein without departing from the spirit and scope of the disclosure as defined by the appended claims and their equivalents.

## Claims

1. A wearable electronic device comprising:
at least one sensor;
a display;
at least one processor comprising processing circuitry; and
memory storing instructions that, when executed by the at least one processor, cause the wearable electronic device to:
detect a plurality of objects included in a first field of view (FOV), capable of detecting through the at least one sensor, of the wearable electronic device,
recognize a type of a first object among the plurality of objects,
identify whether the first object is a real object or a virtual object,
determine a first risk level of the first object, based on the recognized type of the first object and whether the first object is the real object or the virtual object,
determine a first distance related to the first object, based on the first risk level of the first object, and
provide feedback based on the first risk level of the first object, based on a distance between the first object and a user's body being less than or equal to the first distance.

2. The wearable electronic device of claim 1, wherein the instructions, executed by the at least one processor, cause the wearable electronic device to:
detect at least one real object included in the first FOV through the at least one sensor; and
detect at least one virtual object included in a second FOV corresponding to an area displayed on the display and included in the first FOV.

3. The wearable electronic device of claim 1 or 2, wherein the instructions, when executed by the at least one processor, cause the wearable electronic device to determine that a value of the first distance to be greater as the first risk level of the first object is higher.

4. The wearable electronic device of any one of claims 1 to 3, wherein the instructions, when executed by the at least one processor, cause the wearable electronic device to determine an intensity of the feedback based on the first risk level.

5. The wearable electronic device of any one of claims 1 to 4, wherein the instructions, when executed by the at least one processor, cause the wearable electronic device to determine a number of feedback based on the first risk level.

6. The wearable electronic device of any one of claims 1 to 5, wherein the instructions, when executed by the at least one processor, cause the wearable electronic device to further determine a second distance that is longer than the first distance based on the first risk level.

7. The wearable electronic device of any one of claims 1 to 6, wherein the instructions, when executed by the at least one processor, cause the wearable electronic device to change the first distance, based on a speed at which the user's body approaches the first object.

8. The wearable electronic device of any one of claims 1 to 7, wherein the instructions, when executed by the at least one processor, cause the wearable electronic device to determine a risk level of the first object based on a user's usage environment related to the first object, when the first object is a virtual object.

9. The wearable electronic device of any one of claims 1 to 8, further comprising a communication module, wherein the instructions, when executed by the at least one processor, cause the wearable electronic device to transmit a command for providing the feedback to an external device connected through the communication module.

10. The wearable electronic device of any one of claims 1 to 9, further comprising a communication module, wherein the instructions, executed by the at least one processor, when cause the wearable electronic device to identify the distance between the first object and the user's body based on a detection value received from an external device connected through the communication module.

11. A method of controlling a wearable electronic device, the method comprising:
detecting a plurality of objects included in a first field of view (FOV), capable of detecting through at least one sensor of the wearable electronic device, of the wearable electronic device;
recognizing a type of a first object among the plurality of objects;
identifying whether the first object is a real object or a virtual object;
determining a first risk level of the first object, based on the recognized type of the first object and whether the first object is the real object or the virtual object;
determining a first distance related to the first object, based on the first risk level of the first object; and
providing feedback based on the first risk level of the first object, based on a distance between the first object and a user's body being less than or equal to the first distance.

12. The method of claim 11, wherein the detecting of the plurality of objects comprises:
detecting at least one real object included in the first FOV through the at least one sensor; and
detecting at least one virtual object included in a second FOV corresponding to an area displayed on a display of the wearable electronic device and included in the first FOV.

13. The method of any one of claims 11 or 12, wherein the determining of the first distance comprises determining that a value of the first distance to be greater as the first risk level of the first object is higher.

14. The method of any one of claims 11 to 13, wherein the providing of the feedback comprises determining an intensity of the feedback based on the first risk level.

15. The method of any one of claims 11 to 14, wherein the providing of the feedback comprises determining a number of feedback based on the first risk level.
